# FASCICULE DE BREVET EUROPEEN

(11) **EP 1 385 287 B1**
(45) Date de publication et mention de la délivrance du brevet: **25.01.2006**
(21) Numéro de dépôt: 03291841.9
(22) Date de dépôt: 25.07.2003
(51) Int. Cl.: H04J 3/08

(54) **Equipement de multiplexage et routage de flux de données en mode de transfert synchrone ou flux synchrones**
Vorrichtung zum Multiplexen und zur Lenkung von Nutzlasten im synchronen Transfermodus oder synchronen Bitstrom
Apparatus for multiplexing and routing payloads in synchronous transfer mode or synchronous streams

(30) Priorité: 26.07.2002 FR 0209708
(43) Date de publication de la demande: 28.01.2004
(73) Titulaire: Sagem SA, 75015 Paris (FR)
(72) Inventeur: Betoule, Daniel, 22700 Perros-Guirec (FR)
(74) Mandataire: Maillet, Alain

(56) Documents cités:
- US-A- 5 267 239
- THALMANN M ET AL: "A single-chip solution for an ADM-1/TMX-1 SDH telecommunication node element" ASIC/SOC CONFERENCE, 1999. PROCEEDINGS. TWELFTH ANNUAL IEEE INTERNATIONAL WASHINGTON, DC, USA 15-18 SEPT. 1999, PISCATAWAY, NJ, USA,IEEE, US, 15 septembre 1999 (1999-09-15), pages 147-151, XP010360249 ISBN: 0-7803-5632-2
- BASCH B ET AL: "OC-12 Crossconnect For The Vistanet Gigabit Network" OPTICAL MICROWAVE INTERACTIONS/VISIBLE SEMICONDUCTOR LASERS/IMPACT OF FIBER NONLINEARITIES ON LIGHTWAVE SYSTEMS/HYBRID OPTOELECTRONIC INTEGRATION AND PACKAGING/GIGABIT NETWORKS., LEOS 1993 SUMMER TOPICAL MEETING DIGEST ON SANTA BARBARA, CA, USA 19-30, 19 juillet 1993 (1993-07-19), pages G47-G48, XP010068833 ISBN: 0-7803-1284-8
- KOZAK A: "Applications of multichip modules for high speed communications interfaces" PROCEEDINGS OF THE MULTI CHIP MODULE CONFERENCE (MCMC). SANTA CRUZ, MAR. 18 - 20, 1992, LOS ALAMITOS, IEEE COMP. SOC. PRESS, US, vol. CONF. 1, 18 mars 1992 (1992-03-18), pages 16-18, XP010028000 ISBN: 0-8186-2725-5

## Description

La présente invention concerne un équipement de multiplexage et routage de flux de données en mode de transfert synchrone ou flux synchrones, ledit équipement étant par exemple un multiplexeur d'insertion/extraction, un multiplexeur terminal, un répéteur ou un brasseur. On s'intéressera plus particulièrement à un multiplexeur du type insertion/extraction (Add/Drop Multiplexer ou ADM en terminologie anglosaxone) mais l'homme du métier saura extrapoler ce qui est décrit en relation avec un tel multiplexeur à un autre équipement de multiplexage et de routage de flux de données en mode de transfert synchrone. Les flux synchrones sont soit des flux du type SDH (Synchronous Digital Hierarchy : Hiérarchie numérique synchrone), soit des flux du type SONET (Synchronous Optical Network).

Alors que le concept SONET a été développé aux Etats-Unis; la hiérarchie SDH est l'objet notamment de la recommandation G.707 de l'UIT-T (Union Internationale des Télécommunications). La suite de la présente description sera relative à la hiérarchie SDH mais, comme les concepts SONET et SDH sont voisins, il est de la portée de l'homme du métier d'extrapoler ce qui sera dit relativement à la hiérarchie SDH au concept SONET.

Un réseau du type à mode de transfert synchrone peut se présenter sous deux topologies physiques distinctes : d'une part, une topologie en point à point dont la topologie logique se présente sous la forme de bus et, d'autre part, une topologie physique en anneau dont la topologie logique est une topologie en étoile ou maillée. Chaque noeud d'un tel réseau est équipé d'un multiplexeur du type insertion/extraction qui est interconnecté, d'une part, à un multiplexeur Est et à un multiplexeur Ouest formant ainsi deux sections et, d'autre part, à des équipements clients notés EC.

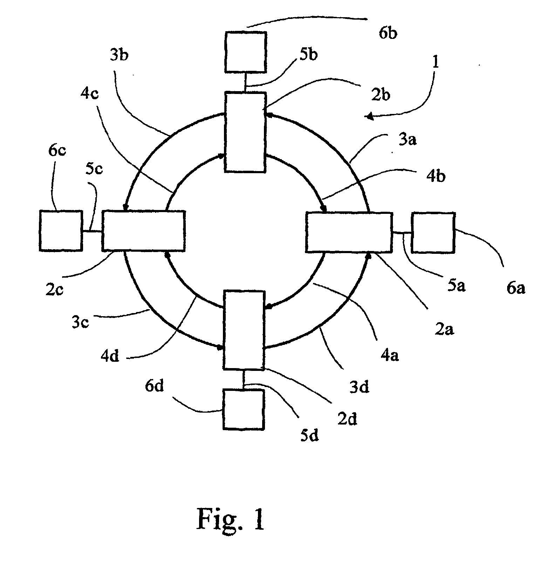

A titre d'exemple, on a représenté à la Fig. 1, un réseau en anneau 1 pourvu de quatre multiplexeurs insertion/extraction 2 reliés deux à deux par des liens, dits de résultant, 3 et 4 sur lesquels les flux de données transitent en tournant respectivement dans le sens inverse des aiguilles d'une montre et dans le sens des aiguilles d'une montre. Chaque multiplexeur insertion/extraction 2 est également relié, par des liens 5, dits d'affluents, à des équipements clients 6.

On notera qu'au lieu d'être relié à un équipement client, un multiplexeur pourrait être relié à un autre multiplexeur du même type d'un autre réseau. Un tel multiplexeur est alors dit brasseur.

Lorsqu'il reçoit un flux synchrone d'un de ses deux voisins, un multiplexeur 2 en extrait les données qui sont destinées aux équipements clients auxquels il est connecté et y ajoute les données que lesdits équipements clients veulent transmettre sur le réseau, puis émet, après mise au format synchrone, des flux synchrones vers son autre voisin. Essentiellement pour des raisons de sécurisation, deux boucles sont formées par les multiplexeurs, l'une dans le sens des aiguilles d'une montre, l'autre dans l'autre sens. Le choix, au niveau d'un multiplexeur, d'un arc d'une boucle plutôt que de l'autre arc de l'autre boucle pour la transmission des données vers un autre multiplexeur est réalisé de manière que le circuit suivi par ces données soit le plus court.

Les flux de données reçus des équipements ou émis vers les équipements sont appelés affluents. Ces affluents peuvent être synchrones ou plésiochrones.

L'avantage du mode de transfert synchrone tel qu'il est spécifié dans la hiérarchie SDH et dans le concept SONET réside dans la structure des trames utilisées qui permettent l'extraction et l'insertion directes de données dans une trame sans qu'il soit nécessaire de la démultiplexer entièrement préalablement.

On va décrire brièvement ci-dessous cette structure mais, pour plus de précisions, on pourra notamment se reporter à la recommandation G707 mentionnée ci-dessus.

Le mode de transfert synchrone est basé sur une technologie de multiplexage à division temporelle. Plus précisément, les données à transmettre sont portées par des affluents qui peuvent être synchrones ou plésiochrones. Au moment de son ajout dans une trame, un affluent est d'abord projeté dans un container dont le type dépend du débit de ses données et auquel sont ensuite ajoutées des données de gestion sous la forme d'un surdébit POH formant ainsi un container virtuel. Le transport des containers virtuels sur des trames STM-n (n = 1, 4, 16, 64 ou 256) s'effectue par un multiplexage temporel. Au moment de l'extraction d'un affluent d'une trame, différents pointeurs permettent de repérer le container virtuel associé. Les données de l'affluent sont alors extraites du container correspondant et les données de gestion sont extraites du surdébit POH associé. On notera que ces données de gestion concernent la gestion du conduit reliant l'émetteur et le récepteur, d'où le nom du surdébit associé : POH = Path OverHead.

Les trames STM-n sont le résultat du multiplexage de n trames STM-1 dont elles reprennent la structure générale.

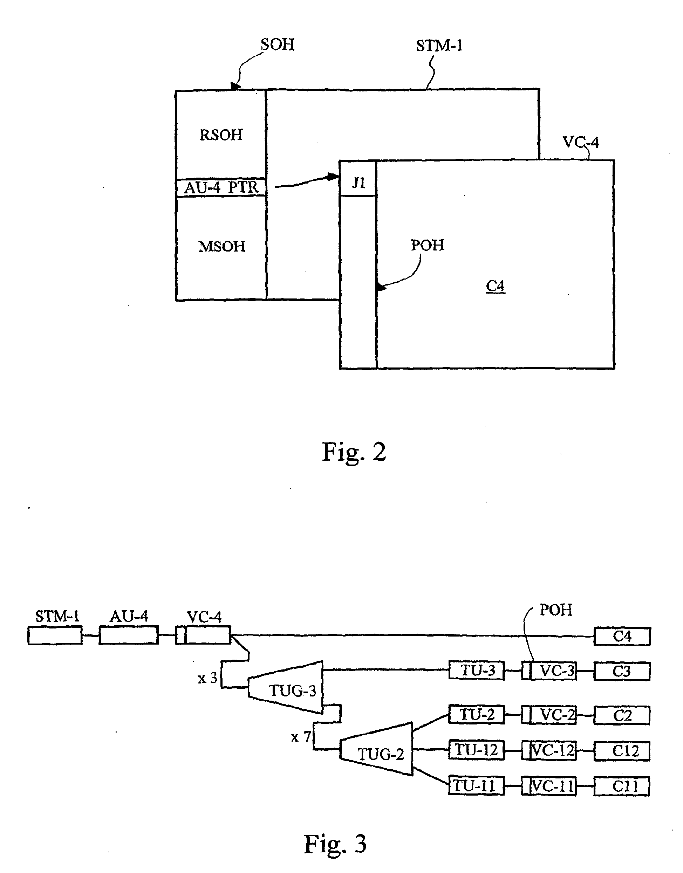

On a représenté à la Fig. 2 une trame SDH dont on explique maintenant la structure. Cette trame, nommée STM-1, est constituée d'un ensemble d'octets que l'on peut représenter en un rectangle de 9 lignes et de 270 colonnes. Les neuf premières colonnes de cette trame contiennent le surdébit dit de section (SOH : Section OverHead) contenant lui-même des informations de service associées à la gestion de la section de la ligne, c'est-à-dire de la partie de ligne entre deux équipements synchrones. Plus exactement, le surdébit SOH est divisé en deux parties : le surdébit RSOH contenant les informations de gestion des sections de régénération et le surdébit MSOH contenant les informations de gestion des sections de multiplexage. Parmi les octets contenus dans le surdébit de section SOH, les premiers octets forment entre eux un mot de verrouillage de trame.

La charge utile de la trame contient quant à elle des containers virtuels qui sont arrangés hiérarchiquement. Plus précisément, elle contient un ou plusieurs conteneurs d'ordre supérieur VC-4 ou VC-3, lesquels contiennent des conteneurs d'ordre inférieur tels que les conteneurs VC-3, VC-2, VC-12 ou VC-11.

Ainsi, la charge utile d'une trame STM-1 contient une unité administrative dite AU-4 qui est l'association d'un container virtuel dit VC-4 et d'un pointeur appelé AU-4 PTR qui se trouve à la quatrième ligne du surdébit de section SOH de la trame. Le container virtuel VC-4 occupe 9 lignes de 261 octets et est lui-aussi constitué, d'une part, d'un surdébit de conduit (Path OverHead) contenant les informations de service de conduit (c'est-à-dire du "conduit" de bout en bout) associées à ce container et sa charge utile (payload) généralement appelée container C-4. La position du container virtuel VC-4 à l'intérieur d'une trame STM-1 n'est pas constante, d'où la nécessité du pointeur AU-4 PTR pointant le premier octet, appelé J1, du container virtuel VC-4.

Comme cela est représenté à la Fig. 3, un container C-4 peut être le résultat d'une projection directe des données à transmettre mais il peut également être le résultat d'un multiplexage de trois groupes d'unités affluents TUG-3.

Chaque groupe TUG-3 peut être une unité affluent TU-3, association d'un pointeur (octets H1, H2 et H3) et d'un container virtuel VC-3. Ce container virtuel VC-3 est alors quant à lui le résultat de l'association d'une part, d'un container C-3 dans lequel sont directement projetées les données à transmettre, et, d'autre part, d'un surdébit POH de gestion du conduit portant lesdites données.

Chaque groupe d'unité affluent TUG-3 peut également être le résultat d'un multiplexage de sept groupes d'unités affluent TUG-2, lesquels peuvent être soit une unité affluent TU-2 provenant d'un container virtuel VC-2 et donc d'un container C-2, soit le résultat du multiplexage de trois unités affluent TU-12 provenant chacun d'un container virtuel VC-12 et donc d'un container C-12, soit encore le résultat du multiplexage de quatre unités affluent TU-11 provenant chacun d'un container virtuel VC-11 et donc d'un container C-11. On rappelle ici qu'un container virtuel est l'association d'un container et d'un surdébit POH contenant des informations relatives au conduit de transmission de ce container.

Les containers virtuels VC-4 et VC-3 sont dits d'ordre supérieur du fait qu'ils n'ont pas besoin d'être encapsulés dans d'autres containers virtuels pour être présents dans une trame STM-n alors qu'à contrario, les autres containers sont dits d'ordre inférieur. On notera l'ambivalence à cet égard du container virtuel VC-3 qui peut être d'ordre supérieur ou d'ordre inférieur s'il est inclus dans un container virtuel VC-4.

Le débit plésiochrone porté par un container C4 est de 140 Mb/s. Le débit plésiochrone porté par un container C3 est de 34 Mb/s alors qu'il est de 6 Mb/s pour un container C2, de 2 Mbit/s pour un container C12 et de 1,5 Mbits/s pour un container C11.

On a montré à la Fig. 2 le multiplexage de containers virtuels C-12 dans une trame STM-1. A un container C-12, on adjoint un surdébit de gestion de conduit Lo-POH (Low order - path overhead : surdébit de conduit d'ordre inférieur) constitué des quatre octets V5, J2, N2 et K4 pour former un container virtuel VC-12. Une unité affluent TU-12 est formée par l'adjonction d'un pointeur formé des deux octets V1 et V2. On notera que le container virtuel VC-12 "flotte" dans l'unité affluent TU-12. Trois unités affluents TU-12 sont multiplexées pour former un groupe d'unités affluents TUG-2. Puis sept groupes d'unités affluents TUG-12 sont multiplexées pour former un groupe d'unités affluents TUG-3 qui sont par trois multiplexées de manière à former un container d'ordre supérieur VC-4. Un pointeur AU-PTR est adjoint à ce container d'ordre supérieur VC-4 de manière à former une unité administrative AU-4 laquelle est encapsulée dans la trame STM-1.

Dans un réseau synchrone, un multiplexeur insertion/extraction est donc installé à chaque noeud et a pour fonction essentielle de repérer les différents containers virtuels qui sont contenus dans la trame entrante, de déterminer parmi ceux-ci ceux dont les données sont destinées aux équipements clients associés à ce noeud, de les extraire de la trame pour les commuter vers les affluents correspondants, d'ajouter dans la trame de nouveaux containers virtuels dans lesquels ont été projetées les données des affluents issus des équipements clients à transmettre vers d'autres noeuds du réseau, puis d'émettre chaque trame résultante vers le noeud suivant du réseau.

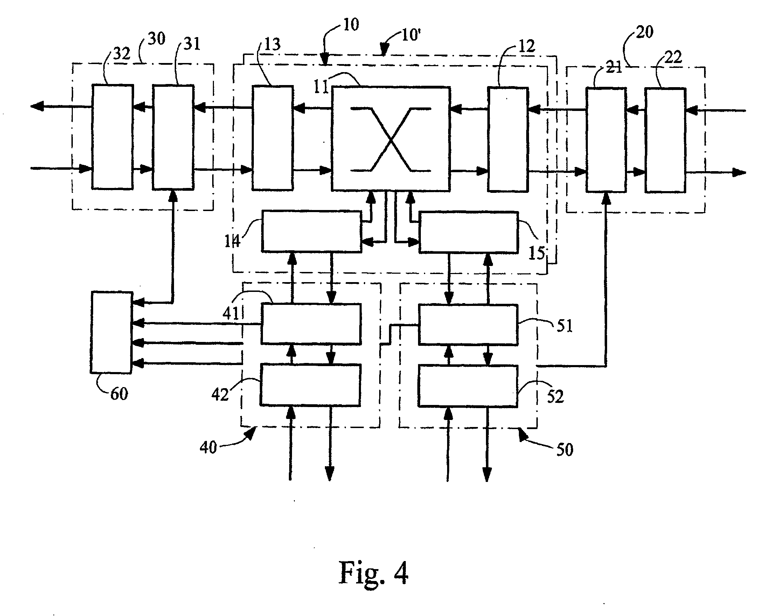

Un multiplexeur insertion/extraction présente généralement l'architecture suivante visible à la Fig. 4. Il comprend une unité de commutation 11 dont chaque port bi-directionnel est relié à une unité d'adaptation 12, 13, 14 et 15. L'unité de commutation 11 peut être amenée à commuter des containers virtuels d'ordre inférieur tels que des containers virtuels VC-11, VC-12, VC-2, VC-3 ou bien des containers d'ordre supérieur tels que des containers virtuels VC-4 ou VC-3. Les unités d'adaptation 12, 13, 14 et 15 ont pour fonction d'encapsuler les containers virtuels d'ordre inférieur dans des containers virtuels d'ordre supérieur tels que des VC-4 ou VC-3, en positionnant les pointeurs nécessaires (notamment les pointeurs V1, V2 de TU-12, les pointeurs H1, H2, H3 de TU-3), en renseignant les octets du surdébit de conduit POH de ces containers virtuels VC-4. Elles font également les traitements inverses dans l'autre sens de transmission.

Généralement, l'unité de commutation 11 et les unités d'adaptation 12, 13, 14 et 15 sont montées sur une même ou plusieurs cartes en circuit imprimé 10, appelée carte(s) matrice(s).

Le multiplexeur d'insertion/extraction comporte encore des interfaces de mise en trame 21, 31, 41 et 51 dont la fonction essentielle est de constituer des unités administratives d'ordre supérieur AU-4 en associant aux containers virtuels d'ordre supérieur VC-4 ou VC-3 qu'elles reçoivent respectivement des unités d'adaptation 12, 13, 14 et 15 des pointeurs AU-4 PTR vers lesdits containers virtuels d'ordre supérieur et à projeter ces unités administratives AU-4 dans des trames STM-n en établissant les surdébits de section SOH associés. Dans l'autre sens de transmission, les fonctions inverses sont mises en oeuvre dans les interfaces 21,31,41 et 51.

Enfin, il comprend des interfaces physiques 22, 32, 42 et 52 qui assurent la mise en forme des signaux reçus des interfaces 21, 31, 41 et 51 en signaux compatibles avec les liens de résultant ou les liens d'affluents. Il s'agit par exemple, en ce qui concerne notamment les interfaces physiques de résultant 22 et 32, des interfaces vers des signaux optiques pour fibres optiques. Pour les interfaces physiques d'affluents 42 et 32, il peut s'agir d'interfaces vers des signaux électriques, par exemple pour des paires torsadées, des câbles coaxiaux, etc. Mais, il pourrait également s'agir d'interfaces vers des signaux optiques.

Les systèmes de multiplexage et de routage de l'art antérieur sont tous composés de moyens qui permettent d'assurer les fonctions essentielles décrites ci-dessus. Ce qui les différencient ce sont les façons de relier entre eux les éléments qui les composent, c'est à dire l'architecture de ces systèmes. Par exemple, Thalmann et al. décrit, dans un article intitulé "A single-chip solution for an ADM-1/TMX-1 SDH telecommunication node element" (ASIC/SOC conference, 1999. Proceedings, twelfth annual IEEE International Washington, DC, USA 15-18 sept. 1999, Piscataway, NJ, USA, IEEE, US, 15 september 1999, pages 147-151, ISBN: 067803-5632-2), deux architectures d'un multiplexeur terminal Add-Drop pour des réseaux SDH.

La première de celles-ci comprend deux cartes d'interfaçage optique et deux cartes de commutation en redondance incorporant les interfaces PDH qui peuvent faire l'objet de cartes annexes. Des liaisons sont assurées entre les cartes d'interfaçage optique afin d'assurer, d'une part les liaisons directes Est-Ouest et, d'autre part, une fonction de protection de ligne de type MSP. La protection "MSP ring" n'est pas décrite dans le document D1. Deux solutions sont envisageables pour l'homme du métier. Soit cette protection est définie conformément aux normes G.783 et G.841 de l'UIT-T., c'est-à-dire qu'elle est implémentée au niveau des unités administratives AU-4. Dans le cas de la première architecture, cette solution serait réalisée sur les cartes résultant, non sécurisées. Soit cette protection est implémentée à partir des containers

VC-4 sur la carte comprenant la matrice de commutation. Du fait que cette carte est dupliquée, la protection MSP "ring" est sécurisée mais cette implémentation n'est pas conforme à la norme G.783 et G.841. Enfin, cette architecture présente une complexité importante en nombre de flux échangés entre la carte matrice et les cartes physiques. En effet, comme des containers VC-4 sont transmis aux cartes résultant et affluent, un nombre important de fils est nécessaire pour transmette non seulement les données mais également des signaux d'accompagnement.

La seconde architecture comprend deux cartes incorporant chacune une unique interface optique et une unique matrice de commutation. Ainsi, la protection d'équipement n'est pas assurée (pas de duplication de la matrice de commutation). Des liaisons portant des trames STM-1 sont également prévues entre les deux cartes de manière à assurer les liaisons directes Est-Ouest. La protection MSP "ring" n'est pas décrite et ne peut être déduite de la description donnée par le document D1 qui ne fait référence qu'à des trames STM-1. On rappelle que la protection MSP "ring" ne peut être mise en oeuvre qu'à partir des trames STM-n, c'est-à-dire à partir de trames comportant plusieurs VC4.

Généralement, les interfaces de mise en trame 21, 31, 41 et 51 ainsi que les interfaces physiques 22, 32, 42, et 52 sont respectivement montées sur des mêmes cartes de circuit imprimé 20, 30, 40 et 50, appelées soit carte résultant (pour les cartes 20, 30), soit carte affluent (pour les cartes 40 et 50).

Une telle architecture présente l'avantage d'être modulaire en ayant comme point commun le container virtuel VC-4.

Elle présente néanmoins un certain nombre d'inconvénients. Le premier est une complexité relativement importante due au nombre de cartes qu'il est nécessaire d'interconnecter avec toutes les contraintes d'interconnexion que cela comporte (nombre de fils importants, fréquence relativement élevée des signaux transitant d'une carte à l'autre, etc.).

En général, pour améliorer la sûreté des transmissions via un multiplexeur, la carte matrice est doublée. Ainsi, en cas de panne de la carte active, le double peut être mis en oeuvre pour rétablir de nouveau les communications qui ont été momentanément interrompues. Ceci étant, dans l'architecture décrite dans la Fig. 4, la redondance des fonctions de traitement SDH est partielle. En effet, la mise en trame STM-n qui est opérée dans les cartes 20, 30, 40 n'est pas doublée.

Dans le surdébit de section SOH de la trame STM-n, la norme prévoit deux octets, dits E1 et F1, prévus pour des canaux de voie de service entre section de régénération, par exemple pour données ou pour téléphone. Ces canaux sont chacun à 64kbit/s. De même, il est prévu trois octets D1, D2 et D3 qui ouvrent un canal de données, dit DCC (Data Communication Channel : canal de communication de données) pour la gestion du réseau à 192 kbits/s. Ces canaux de voie de service et de gestion sont appelés dans la suite de la description, canaux de communication.

Dans l'architecture qui est représentée à la Fig. 4, ces canaux de communication E1, F1 et DCC qui ne sont présents qu'au niveau des trames STM-n sont traités par les interfaces de mise en trame 21, 31, 41 et 51. Or, tous les signaux transitant par ces canaux ne sont pas forcément traités au lieu et au moment considéré. Cependant, dans l'architecture de l'art antérieur, il est nécessaire de les regrouper tous, puis de sélectionner ceux qui sont nécessaires et rerouter ceux qui ne le sont pas dans une unité de gestion appropriée, ici l'unité 60. Cette disposition a pour effet d'augmenter encore le nombre de connexions nécessaires entre les différentes cartes de circuit imprimé.

Le but de la présente invention est donc de prévoir une nouvelle architecture de multiplexeur d'ajout/retrait qui ne présente pas les inconvénients de l'architecture qui est décrite ci-dessus en relation avec la Fig. 4.

De manière générale, la présente invention concerne un équipement de multiplexage et de routage de flux de données en mode de transfert synchrone, tel qu'un multiplexeur d'insertion/extraction, un multiplexeur terminal, un répéteur ou un brasseur, lesdits flux de données se présentant sous la forme de trames soit de type SDH (Synchronous Digital Hierarchy : Hiérarchie numérique synchrone), soit de type SONET (Synchronous Optical Network), lesdites trames comportant au moins un container virtuel d'ordre supérieur dans lequel sont insérés des containers virtuels d'ordre inférieur, ledit équipement comprenant une matrice de commutation pour le routage desdits containers virtuels d'ordre inférieur ou du ou des containers virtuels d'ordre supérieur, des moyens d'insertion/extraction desdits containers virtuels d'ordres inférieur et supérieur dans des trames, et des interfaces physiques.

Selon une caractéristique de la présente invention, cet équipement est caractérisé en ce que ladite matrice de commutation et lesdits moyens d'insertion/extraction sont montés sur une même carte de circuit imprimé, dite carte matrice, à laquelle sont connectées des interfaces physiques sous la forme de cartes de circuit imprimé.

Selon une autre caractéristique de l'invention, dans le cas où lesdites trames comportent un surdébit d'en-tête de section dans lequel sont insérés des octets de canaux de communication, il comporte des moyens pour traiter lesdits octets de canaux de communication, lesdits moyens étant présents sur ladite carte matrice.

Selon une autre caractéristique de l'invention, lesdits moyens sont prévus pour extraire et sélectionner lesdits octets de canaux de communication nécessaires et rerouter ceux qui ne le sont pas.

Selon une autre caractéristique de l'invention, ladite carte matrice est dupliquée.

Selon une autre caractéristique de l'invention, il comporte deux unités de mise en trame qui sont reliées à des ports d'entrée/sortie supportant des flux de résultant et deux unités de mise en trame qui sont reliées à des ports d'entrée/sortie supportant des flux d'affluent, chacun desdits ports d'entrée/sortie supportant des trames synchrones, lesdites unités de mise en trame étant prévues pour réaliser l'insertion et l'extraction de containers d'ordre inférieur et du ou des containers d'ordre supérieur, chaque unité de mise en trame étant reliée à un port de ladite matrice de commutation.

Selon une autre caractéristique de l'invention, il est constitué de quatre circuits de traitement identiques, chaque circuit de traitement comportant un circuit de traitement des trames synchrones reçues sur un port d'entrée dudit circuit pour délivrer sur un port de sortie, sous forme de pseudo-trames, les containers virtuels qu'elles contiennent, une matrice de commutation pour extraire, des pseudo-trames présentes sur ses ports d'entrée, les containers virtuels destinés à être émis sur un port de sortie synchrone dudit circuit et les délivrer sous la forme d'une pseudo-trame, un circuit de traitement desdites pseudo-trames délivrées par ladite matrice de commutation pour délivrer des trames synchrones sur ledit port de sortie synchrone dudit circuit, trois ports d'entrée de pseudo-trames d'un circuit étant respectivement reliés aux ports de sortie des trois autres circuits, le quatrième port d'entrée de pseudo-trames d'un circuit étant relié au quatrième port de sortie du même circuit.

Selon une autre caractéristique de l'invention, chaque circuit de traitement comporte une section d'émission et une section de réception, ledit circuit de traitement comporte un circuit de rebouclage placé, dans la section émission, en aval de la matrice de commutation après le traitement de la ou des unités administratives et, dans la section réception, en aval du port d'entrée avant le traitement de ladite ou desdites unités administratives.

Selon une autre caractéristique de l'invention, chaque circuit de traitement comporte des moyens d'insertion et d'extraction des octets des canaux de communication.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est un schéma représentatif d'un réseau en anneau qui pourrait être du type synchrone,
La Fig. 2 montre la structure d'une trame STM-1 et ces différents composants,
La Fig. 3 montre la hiérarchie des différentes structures qui peuvent constituer une trame STM-1,
La Fig. 4 est un schéma synoptique d'un multiplexeur d'insertion/extraction selon l'état de la technique,
La Fig. 5 est un schéma synoptique d'un multiplexeur d'insertion/extraction selon la présente invention,
La Fig. 6 est un schéma représentatif d'un réseau en anneau identique à celui qui est représenté à la Fig. 1 mais dont un lien de résultant est sectionné,
La Fig. 7 est un schéma synoptique d'une carte matrice qui peut équiper un multiplexeur d'insertion/extraction selon la présente invention, et
La Fig. 8 est un schéma synoptique d'un composant utilisé dans une carte matrice telle que celle qui est représentée à la Fig. 7.

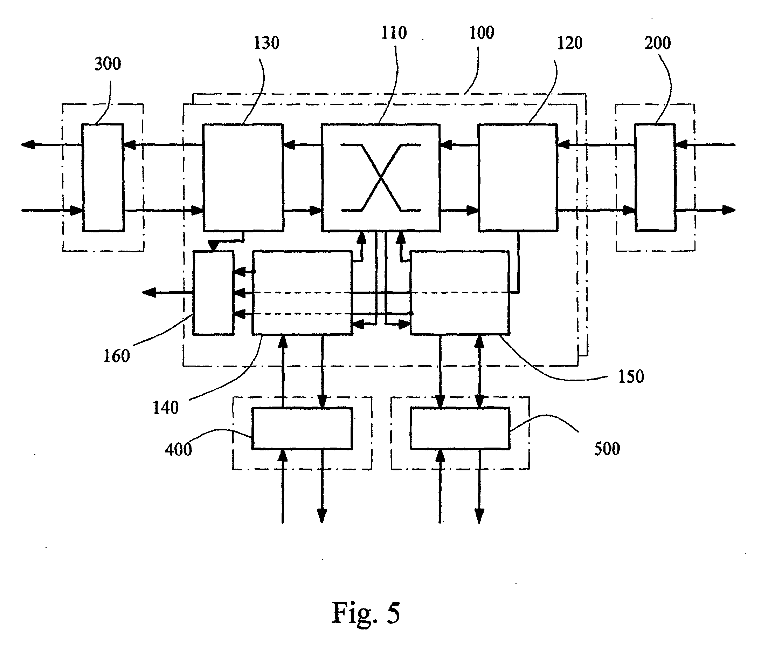

On a représenté à la Fig. 5 une architecture d'un multiplexeur d'insertion/extraction selon la présente invention. Ce multiplexeur comprend une unité de commutation 110 dont chaque port bi-directionnel est relié à des unités de mise en trame 120, 130, 140 et 150 qui ont pour fonction essentielle l'encapsulation dans une trame STM-n, dans un sens de transmission, et la désencapsulation d'une trame STM-n, dans l'autre sens de transmission, des containers virtuels d'ordre inférieur tels des containers virtuels VC-11, VC-12, VC-2, VC3 ou des containers d'ordre supérieur tels que des containers VC-4 ou VC-3 traités par l'unité de commutation 110. Cette unité de commutation 110 et les unités de mise en trame 120, 130, 140 et 150 sont montées sur une même carte en circuit imprimé 100, appelée aussi carte matrice.

Sur chaque port d'entrée/sortie de la carte en circuit imprimé 100, sont présentes des trames STM-n (n = 1, 4, 16, 64 ou 256), contrairement aux cartes matrices de l'état de la technique sur lesquelles étaient présents des containers virtuels VC-4.

Le multiplexeur de la présente invention comporte également des interfaces physiques 200, 300, 400 et 500 qui, recevant les signaux mis sous la forme de trames STM-n de la carte matrice 100, délivrent des signaux compatibles avec les liens résultants (interfaces 200 et 300) et les liens d'affluents (interfaces 400 et 500). Elles agissent de manière inverse dans l'autre sens de transmission. Il peut s'agir d'interfaces vers des signaux optiques pour fibres optiques, ou vers des signaux électriques à haut débit. Pour les interfaces physiques d'affluent 400 et 500, il peut s'agir d'une interface vers des signaux électriques, par exemple pour des paires torsadées, des câbles coaxiaux, etc. ou vers des signaux optiques.

Une telle architecture présente les avantages suivants.

La structure résultante est plus compacte, d'une part, du fait d'une meilleure intégration possible de la carte matrice 100, et, d'autre part, du fait que les interfaces physiques 200, 300, 400 et 500 sont des éléments en eux-mêmes de relativement petites dimensions.

Cette architecture autorise aussi une plus grande flexibilité dans le choix des interfaces physiques 200, 300, 400 et 500 puisqu'elles interfacent uniquement des signaux portant des trames STM-n qui sont normalisées.

Un autre avantage résulte de la simplification des flux de signaux échangés entre la carte matrice 100 et les cartes physiques 200, 300, 400 et 500. En effet, alors que dans l'architecture de l'art antérieur, ce sont des containers virtuels VC-4 qui sont transmis aux cartes de résultant ou d'affluent, nécessitant non seulement des fils pour les données mais aussi pour des signaux d'accompagnement, selon l'invention ce sont des trames STM-n qui sont transmises aux cartes physiques, ce qui ne nécessite seulement que les fils à la transmission de ces trames en nombre inférieur au nombre de fils nécessaires à la transmission des containers virtuels VC-4.

Un autre avantage résulte du fait que la duplication de la carte matrice, pour des raisons de sécurisation, va entraîner la duplication de toutes les fonctions de traitement sur les trames STM-n alors que, dans l'état de la technique, seules les fonctions de traitement à partir des containers virtuels VC-4 étaient dupliquées.

D'autres avantages résultent du fait que les traitements qui sont réalisés au niveau trames STM-n ne sont plus délocalisés dans des unités se trouvant dans des cartes de résultant ou des cartes d'affluent mais sont au contraire localisés sur la carte matrice 100.

Il en est ainsi de la gestion des flux de canaux de communication E1, F1 et DCC qui sont maintenant traités et disponibles directement sur une seule et même carte, à savoir la carte matrice 100, Ce traitement est simplifié dans la mesure où certains flux peuvent être extraits des trames STM-n pour être sélectionnés et dirigés vers une unité de traitement de canaux de communication 160 et, par conséquent, d'autres ignorés et reroutés directement sur la carte matrice, ce qui ne pouvait pas être le cas avec l'architecture de l'art antérieur où l'ensemble des flux devait être extrait, puis amené à une unité de gestion qui elle, en effectuait la sélection et le rcroutage.

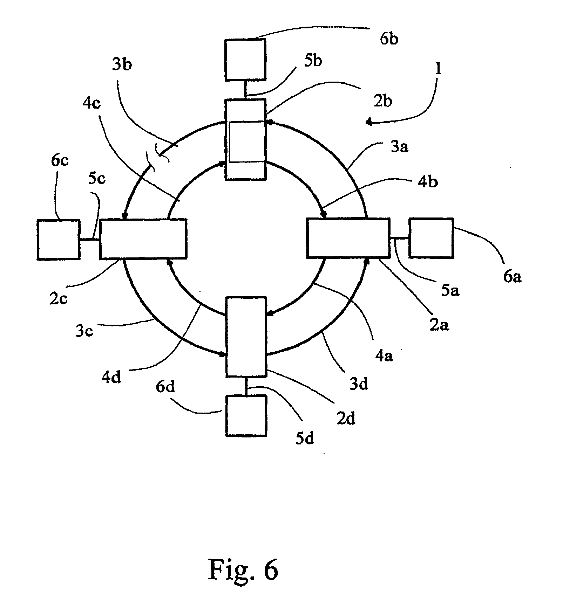

Il en est ainsi aussi de l'implémentation de la protection qui est prévue dans les normes G.783 et G.841 de l'UIT-T, protection dite MS SPRING. En référence à la Fig. 6, on rappelle ci-dessous son principe.

On a représenté à la Fig. 6 un réseau en anneau identique à celui de la Fig. 1, mais pour lequel un des liens 3, en l'occurrence le lien 3b, est sectionné. Supposons que l'utilisateur de l'équipement 6a veuille transmettre des données à l'utilisateur de l'équipement 6c via les liens 3a et 3b. Selon l'implémentation de la protection normalisée, ces données qui transitent par le multiplexeur 2b sont basculées, dans le multiplexeur 2 en amont du sectionnement, en l'occurrence le multiplexeur 2b, sur le lien 4a puis transitent via les multiplexeurs 2a et 2d jusqu'au multiplexeur 2c où elles sont extraites des trames STM-n pour être délivrées sur l'équipement client 6c.

Le basculement des flux doit être exécuté, selon les normes G.783 et G.841 de l'UIT-T évoquées ci-dessus, au niveau des unités administratives AU-4. Celles-ci incorporent non seulement les containers virtuels VC-4 mais également le pointeur AU-4 PTR qui lui se trouve dans le surdébit SOH de la trame STM-n. Ces unités administratives AU-4 sont donc traitées au niveau de la trame STM-n.

L'invention rend l'implémentation de la fonction de protection dite MS SPRING conforme aux normes G.783 et G.841 de l'UIT-T évoquées ci-dessus, contrairement aux architectures de l'art antérieur où cette implémentation n'est en général réalisée qu'au niveau VC-4.

L'implémentation au niveau AU-4 de la fonction MS SPRING dans les architectures de l'art antérieur est possible mais n'est pas complètement sécurisée. En effet, une telle implémentation ne pouvait se faire que dans les cartes de résultant (cartes 20 ou 30 de la Fig. 4) qui, elles, ne sont pas dupliquées. En conséquence, une panne de celles-ci entraînait un dysfonctionnement de la fonction MS SPRING. D'où, dans l'art antérieur, on préfère réaliser cette implémentation de cette fonction au niveau VC-4, même si elle n'est pas conforme aux normes G.783 et G.841 de l'UIT-T.

L'invention résout ce problème dans la mesure où les fonctions de traitement de l'unité administrative AU-4 sont réalisées sur la carte matrice qui, elle, est dupliquée.

La protection est donc mieux assurée au moyen de l'architecture selon l'invention.

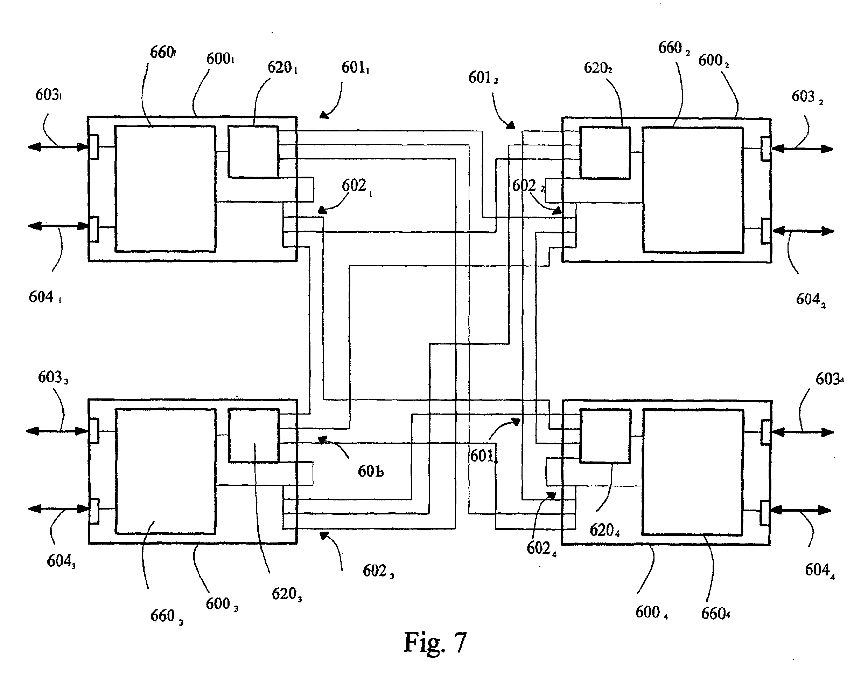

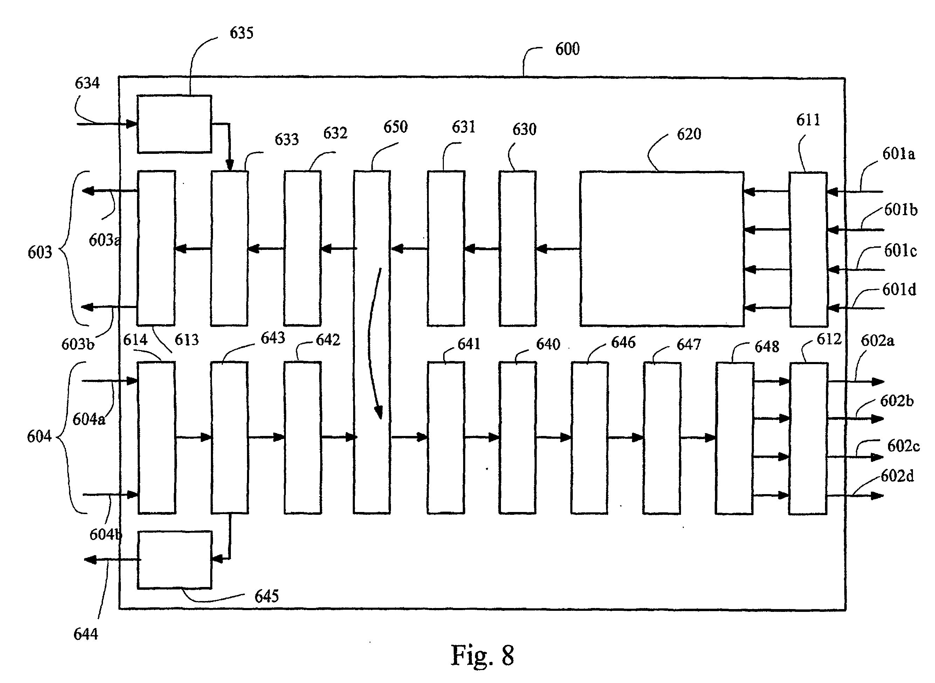

On a représenté à la Fig. 7 un schéma synoptique simplifié d'une carte matrice qui peut être utilisée dans une architecture selon la présente invention. Cette carte matrice est bâtie autour de quatre circuits de traitement identiques, par exemple constitués chacun d'un circuit intégré spécifique du type ASIC (Application-Specific Integrated Circuit) dont un schéma synoptique simplifié est représenté à la Fig. 8.

Comme on peut le constater sur cette dernière Fig. 8, un circuit 600 comporte quatre ports d'entrée 601a à 601d et quatre ports de sortie 602a à 602d pour des pseudo-trames du type STM-n contenant des containers virtuels alignés d'ordre inférieur, par exemple des containers virtuels VC-12 et d'ordre supérieur tels que des containers virtuels VC-4 ou VC-3. On appelle peudo-trames des trames qui ont la structure des trames STM-n mais qui ne sont pas complètement renseignées, par exemple dans les surdébits RSOH et MSOH. Par ailleurs, les containers virtuels qu'elles contiennent sont alignés, c'est-à-dire que leurs pointeurs ont des valeurs prédéterminées.

Le circuit 600 comporte encore un port de sortie synchrone 603 et un port d'entrée synchrone 604 pour l'émission et la réception de trames synchrones, par exemple STM-n. Chaque port 603 et 604 comporte un lien 603a, 604a pour les données et un lien 603b, 604b pour le signal d'horloge. Le circuit 600 comporte pour chaque port 601a à 601d, 602a à 602d, 603, 604 une interface d'adaptation 611, 612, 613 et 614.

Le circuit 600 comporte une matrice de commutation 620 de quatre ports vers un dont la fonction est d'extraire des pseudo-trames présentes sur ses quatre ports d'entrée les containers virtuels destinés à être émis sur le port de sortie synchrone 603, à former une pseudo-trame les contenant et diriger cette pseudo-trame vers son port de sortie.

Il comprend encore un circuit 630 de construction du surdébit POH du ou des containers virtuels d'ordre supérieur VC-4 qui seront contenus dans la trame STM-n qui sera émise, un circuit 631 de construction de ou des unités administratives correspondantes AU-4 par l'établissement du ou des pointeurs correspondants AU-4 PTR, un circuit 632 de construction du surdébit d'en-tête de multiplexage MSOH contenant les informations de gestion dédiées aux sections de multiplexage (section dont au moins une extrémité est un multiplexeur) et un circuit 633 de construction du surdébit d'en-tête de régénération RSOH contenant les informations de gestion dédiées aux sections de régénération (section entre deux systèmes de régénération). On notera que ce dernier circuit 633 est pourvu d'une entrée pour l'insertion des données relatives aux canaux de communication (E1, F1 et DCC), données reçues sur un port approprié 634 et traitées par un circuit 635.

On comprendra qu'à la sortie du circuit 633 est constituée une trame STM-n qui est alors délivrée, via l'interface 613, sur le port de sortie 603.

Le circuit 600 comporte encore un circuit 643 de traitement du surdébit d'en-tête de régénération RSOH qui délivre en outre des données relatives aux canaux de communication (E1, F1 et DCC) qui sont délivrés, via un circuit de traitement 645, sur un port 644. Il comporte encore un circuit 642 de traitement du surdébit d'en-tête de multiplexage MSOH, un circuit 641 de recouvrement du ou des pointeurs AU-4 PTR de la ou des unités administratives AU-4 contenues dans la trame reçue sur l'entrée 604, un circuit 640 de traitement du surdébit POH du ou des containers virtuels d'ordre supérieur VC-4 correspondants, un circuit 646 de traitement du pointeur des unités affluents, par exemple les unités affluents TU-12, contenues dans le ou les containers virtuels d'ordre supérieur VC-4, un circuit 647 de traitement des surdébits d'en-tête POH des containers virtuels d'ordre inférieur correspondant à ces unités affluents et un circuit de duplication 648 pour délivrer, via l'interface d'adaptation 612, sur les ports de sortie 602a à 602d, une même pseudo-trame contenant tous les containers virtuels qui étaient contenus dans la trame STM-n sur le port d'entrée synchrone 604.

On comprendra que les flèches de la Fig. 7 correspondent au sens de circulation des données dans le circuit 600.

Le circuit 600 comporte encore un circuit de rebouclage 650 qui a pour fonction de délivrer à l'entrée du circuit 641 le flux constitué de ou des unités administratives AU-4 en sortie du circuit 631 uniquement lorsque le lient résultant est coupé en aval du circuit 600, sinon ce flux est normalement délivré au circuit 632. Le circuit de rebouclage 650 permet d'assurer la fonction MS SPRING.

On peut constater que le circuit de rebouclage 650 est placé, dans la section émission, en aval de la matrice de commutation 620 après l'insertion du pointeur AU-PTR de l'unité administrative AU-4 et, dans la section réception, en aval du port d'entrée 604 avant le traitement de ce pointeur AU-PTR de l'unité administrative AU-4.

On remarquera que le rebouclage résultant intervient ainsi au niveau de la ou des unités administratives AU-4. On remarquera également que ce rebouclage intervient également de la section émettrice vers la section réceptrice du circuit 600 et après la matrice de commutation 620. Ainsi, le flux rebouclé est assemblé en une ou plusieurs unités administratives AU-4 dans la section émettrice du circuit 600, puis dans la section réceptrice, est désassemblé en ses containers virtuels qui sont ensuite réalignés. Comme on le comprendra, l'unité administrative AU-4 sera normalement de nouveau reconstituée dans un autre circuit 600 identique avant d'être émise dans une trame STM-n.

A la Fig. 7, on peut voir comment quatre circuits de traitement 600₁, 600₂, 600₃ et 600₄ sont assemblés de manière à former un multiplexeur d'insertion/extraction. On reconnaît dans chaque circuit 600₁, 600₂, 600₃ et 600₄, sa matrice de commutation 620₁, 620₂, 620₃ et 620₄, ses circuits de traitement et de mise sous la forme de trames STM-n que l'on a représentés par une unique boîte fonctionnelle 660₁, 660₂, 660₃ et 660₄.

On reconnaît également les ports 603₁ à 603₄ et 604₁ à 604₄ d'entrée et de sortie de trames STM-n ainsi que les ports 601₁ à 601₄ et 602₁ à 602₄ d'entrée et de sortie de pseudo-trames.

Les ports 603₁, 604₁ et 603₂, 604₂ forment les ports d'entrée et de sortie des résultants respectivement Ouest et Est alors que les ports 603₃, 604₃ et 603₄, 604₄ forment les ports d'entrée et de sortie des affluents respectivement Ouest et Est de la carte matrice.

La connexion des quatre circuits 600 est la suivante : trois ports 601a, 601b et 601 c d'entrée de pseudo-trames d'un circuit 600 sont respectivement reliés aux ports de sortie 602 des trois autres circuits 600. Le quatrième port 601d d'entrée de pseudo-trames d'un circuit 600 est relié au quatrième port de sortie 602 du même circuit 600.

## Revendications

1. Equipement de multiplexage et de routage de flux de données en mode de transfert synchrone, tel qu'un multiplexeur d'insertion/extraction, un multiplexeur terminal, un répéteur ou un brasseur, lesdits flux de données se présentant sous la forme de trames soit de type SDH, soit du type SONET, lesdites trames comportant au moins un container virtuel d'ordre supérieur dans lequel sont insérés des containers virtuels d'ordre inférieur, ledit équipement comprenant une matrice de commutation pour le routage desdits containers virtuels d'ordre inférieur ou du ou des containers virtuels d'ordre supérieur, des moyens d'insertion/extraction desdits containers virtuels d'ordres inférieur et supérieur dans des trames, lesdits moyens d'insertion/extraction comprenant deux unités de mise en trame (120, 130) qui sont reliées à des ports d'entrée/sortie supportant des flux de résultant et deux unités de mise en trame (140,150) qui sont reliées à des ports d'entrée/sortie supportant des flux d'affluent, chacun desdits ports d'entrée/sortie supportant des trames synchrones, chaque unité de mise en trame (120,130,140,150) étant reliée à un port de ladite matrice de commutation (110), et des interfaces physiques, **caractérisé en ce que** ladite matrice de commutation et lesdites unités de mise en trame (120,130,140,150) sont montées sur une même carte de circuit imprimé, dite carte matrice, ladite carte matrice étant montée en parallèle d'une deuxième carte matrice, chacune desdites cartes matrice est connectée à des interfaces physiques (200,300,400,500) sous la forme de cartes de circuit imprimé et respectivement reliées auxdits ports d'entrée/sortie desdites unités de mise en trame (120,130,140,150),

2. Equipement de multiplexage et de routage selon la revendication 1, lesdites trames comportant un sur-débit d'en-tête de section dans lequel sont insérés des octets de canaux de communication, **caractérisé en ce qu'**il comporte des moyens de traitement pour traiter lesdits octets de canaux de communication, lesdits moyens étant présents sur ladite carte matrice.

3. Equipement de multiplexage et de routage selon la revendication 2, **caractérisé en ce que** lesdits moyens de traitement sont prévus pour extraire et sélectionner lesdits octets de canaux de communication nécessaires et rerouter ceux qui ne le sont pas.

4. Equipement de multiplexage et de routage de flux de données selon une des revendications précédentes, du type multiplexeur d'insertion/extraction ou brasseur, **caractérisé en ce qu'**il est constitué de quatre circuits de traitement identiques, chaque circuit de traitement comportant un circuit de traitement des trames synchrones reçues sur un port d'entrée dudit circuit pour délivrer les containers alignés qu'elles contiennent sur un port de sortie, sous forme d'une trame synchrone du type STM-n partiellement renseignée, dite pseudo-trame, une matrice de commutation pour extraire, desdites pseudo trames présentes sur ses ports d'entrée, les containers virtuels destinés à être émis sur un port de sortie synchrone (603) dudit circuit et les délivrer sous la forme d'une pseudo-trame, un circuit de traitement desdites pseudo-trames délivrées par ladite matrice de commutation pour délivrer des trames synchrones sur ledit port de sortie synchrone dudit circuit, trois ports (601a, 601b et 601c) d'entrée de pseudo-trames d'un circuit (600) étant respectivement reliés aux ports de sortie (602) des trois autres circuits (600), le quatrième port (601d) d'entrée de pseudo-trames d'un circuit (600) étant relié au quatrième port de sortie (602) du même circuit (600).

5. Equipement de multiplexage et de routage selon la revendication 4, **caractérisé en ce que** chaque circuit de traitement comporte une section d'émission et une section de réception, ledit circuit de traitement comportant un circuit de rebouclage placé, dans la section émission, en aval de la matrice de commutation après le traitement de la ou des unités administratives et, dans la section réception, en aval du port d'entrée avant le traitement de ladite ou desdites unités administratives.

6. Equipement de multiplexage et de routage selon la revendication 4 ou 5, **caractérisé en ce que** chaque circuit de traitement comporte des moyens d'insertion et d'extraction des octets des canaux de communication.

## Patentansprüche

1. Gerät zum Multiplexen und Führen bzw. Routen von Datenflüssen im synchronen Transfermodus, wie zum Beispiel ein Einfüge/Extraktions-Multiplexer, ein Terminal-Multiplexer, ein Verstärker oder ein Mischer, wobei die Datenflüsse die Form von Rahmen von entweder dem SDH-Typ oder dem SONET-Typ haben, wobei die Rahmen mindestens einen virtuellen Container höherer Ordnung enthalten, in den virtuelle Container niedrigerer Ordnung eingefügt sind, wobei das Gerät folgendes aufweist: eine Schaltmatrix für das Führen der virtuellen Container niedrigerer Ordnung oder des oder der virtuellen Container höherer Ordnung, Mittel zum Einfügen/Extrahieren der virtuellen Container niedrigerer und höherer Ordnung in die Rahmen, wobei die Mittel zum Einfügen/Extrahieren zwei Einheiten zum Einfügen in Rahmen (120, 130) aufweisen, die mit Eingangs/Ausgangs-Schnittstellen verbunden sind, die die resultierenden Flüsse unterstützen, sowie zwei Einheiten zum Einfügen in Rahmen (140, 150), die mit Eingangs/Ausgangs-Schnittstellen verbunden sind, die zufließenden Flüsse unterstützen, wobei jede der Eingangs/Ausgangs-Schnittstellen synchrone Rahmen unterstützt, wobei jede Einheit zum Einfügen in Rahmen (120, 130, 140, 150) mit einer Schnittstelle der Schaltmatrix (110) verbunden ist, und physikalische Schnittstellen, **dadurch gekennzeichnet, dass** die Schaltmatrix und die Einheiten zum Einfügen in Rahmen (120, 130, 140, 150) auf eine gleiche Leiterplatte, die Matrixkarte genannt wird, montiert sind, wobei die Matrixkarte zu einer zweiten Matrixkarte parallel geschaltet ist, wobei jede der Matrixkarten an physikalische Schnittstellen (200, 300, 400, 500) in Form von Leiterplatten angeschlossen ist, die jeweils mit den Eingangs/Ausgangs-Schnittstellen der Einheiten zum Einfügen in Rahmen (120, 130, 140, 150) verbunden sind.

2. Gerät zum Multiplexen und Führen nach Anspruch 1, wobei die Rahmen eine Überkapazität eines Sektionsanfangsblocks aufweisen, in den die Bytes von Kommunikationskanälen eingefügt sind, **dadurch gekennzeichnet, dass** es Mittel zum Verarbeiten der Bytes von Kommunikationskanälen aufweist, wobei sich die Mittel auf der Matrixkarte befinden.

3. Gerät zum Multiplexen und Führen nach Anspruch 2, **dadurch gekennzeichnet, dass** die Mittel zum Verarbeiten vorgesehen sind, um die erforderlichen Bytes von Kommunikationskanälen zu extrahieren und auszuwählen und diejenigen, die nicht erforderlich sind, umzuleiten.

4. Gerät zum Multiplexen und Führen von Datenflüssen nach einem der vorangehenden Ansprüche vom Typ eines Einfüge/Extraktions-Multiplexers oder eines Mischers, **dadurch gekennzeichnet, dass** es aus vier identischen Verarbeitungsschaltungen besteht, wobei jede Verarbeitungsschaltung eine Schaltung zum Verarbeiten der synchronen Rahmen umfasst, die bei einer Eingangsschnittstelle der Schaltung empfangen werden, um die ausgerichteten Container, die sie enthalten, in Form eines synchronen Rahmens vom teilweise gefüllten Typ STM-n zu einer Ausgangsschnittstelle zu liefern, welche Pseudorahmen genannt werden, eine Schaltmatrix, um aus den Pseudorahmen, die an den Eingangsschnittstellen vorhanden sind, die virtuellen Container, die dazu bestimmt sind, zu einer synchronen Schnittstelle (603) der Schaltung gesendet zu werden, zu extrahieren und sie in Form eines Pseudorahmens zu liefern, eine Schaltung zum Verarbeiten der Pseudorahmen, die von der Schaltmatrix geliefert werden, um synchrone Rahmen zu der synchronen Ausgangsschnittstelle der Schaltung zu liefern, wobei drei Pseudorahmen-Eingangsschnittstellen (601a, 601b und 601c) einer Schaltung (600) jeweils mit den Ausgangsschnittstellen (602) der drei anderen Schaltungen (600) verbunden sind, wobei die vierte Pseudorahmen-Eingangsschnittstelle (601 d) einer Schaltung (600) mit der vierten Ausgangsschnittstelle (602) der gleichen Schaltung (600) verbunden ist.

5. Gerät zum Multiplexen und Führen nach Anspruch 4, **dadurch gekennzeichnet, dass** jede Verarbeitungsschaltung einen Sendeabschnitt und einen Empfangsabschnitt aufweist, wobei die Verarbeitungsschaltung eine Rückschleifschaltung aufweist, die im Sendeabschnitt stromab von der Schaltmatrix nach der Verarbeitung der einen oder mehreren Verwaltungseinheiten und im Empfangsabschnitt stromab von der Eingangsschnittstelle vor der Verarbeitung der einen oder mehreren Verwaltungseinheiten angeordnet ist.

6. Gerät zum Multiplexen und Führen nach Anspruch 4 oder 5, **dadurch gekennzeichnet, dass** jede Verarbeitungsschaltung Mittel zum Einfügen und Extrahieren der Bytes der Kommunikationskanäle aufweist.

## Claims

1. Equipment for multiplexing and routing data flows in synchronous transfer mode, such as an add/drop multiplexer, a terminal multiplexer, a repeater or a cross-connector, said data flows being provided in the form of SDH type frames or SONET type frames, said frames including at least one high order virtual container into which are added low order virtual containers, said equipment including a switching matrix for the routing of said low order virtual containers or of the high order virtual container or containers, means for adding/dropping said low order and high order virtual containers in the frames, said adding/dropping means comprising two framing units (120, 130) which are connected to input/output ports supporting the resultant flows and two framing units (140, 150) which are connected to input/output ports supporting the tributary flows, each of said input/output ports supporting synchronous frames, each of said framing units (120, 130, 140, 150) being connected to a port of said switching matrix (110), and also including physical interfaces, **characterised in that** said switching matrix and said framing units (120, 130, 140, 150) are mounted on the same printed circuit board, called a matrix board, said matrix board being mounted parallel to a second matrix board, each of said matrix boards is connected to the physical interfaces (200, 300, 400, 500) in the form of printed circuit boards and is respectively connected to said input/output ports of said framing units (120, 130, 140, 150).

2. Equipment for multiplexing and routing according to claim 1, said frames including a section header overhead into which eight-bit bytes of the communication channels are added, **characterised in that** said equipment includes processing means for processing said eight-bit bytes of the communication channels, said means being provided on said matrix board.

3. Equipment for multiplexing and routing according to claim 2, **characterised in that** said processing means are provided to drop and select said eight-bit bytes of the communication channels that are necessary and to reroute those that are not necessary.

4. Equipment for multiplexing and routing data flows according to one of the preceding claims, of the add/drop multiplexer or cross-connector type, **characterised in that** said equipment comprises four identical processing circuits, each processing circuit including a circuit for processing synchronous frames received at an input port of said circuit in order to deliver the aligned containers that they contain on an output port, in the form of a partially completed STM-n type synchronous frame, called a pseudo frame, a switching matrix to drop the virtual containers, intended for transmission at a synchronous output port (603) of said circuit, from said pseudo frames provided at its input ports, and to deliver them in the form of a pseudo frame, a circuit for processing said pseudo frames delivered by said switching matrix in order to deliver the synchronous frames at said synchronous output port of said circuit, three pseudo frame input ports (601 a, 601 b and 601c) of a circuit (600) being respectively connected to the output ports (602) of the three other circuits (600), the fourth pseudo frame input port (601d) of a circuit (600) being connected to the fourth output port (602) of the same circuit (600).

5. Equipment for multiplexing and routing according to claim 4, **characterised in that** each processing circuit includes an outgoing section and an incoming section, said processing circuit including a wrap-around circuit positioned, in the outgoing section, downstream of the switching matrix after the processing of the administrative unit or units and, in the incoming section, downstream of the input port before the processing of said administrative unit or units.

6. Equipment for multiplexing and routing according to claim 4 or 5, **characterised in that** each processing circuit includes means for adding and dropping the eight-bit-bytes of the communication channels.
